(19) Europäisches Patentamt / European Patent Office / Office européen des brevets

(11) **EP 3 091 414 B1**

(12) **EUROPEAN PATENT SPECIFICATION**

(45) Date of publication and mention
of the grant of the patent:
**02.05.2018 Bulletin 2018/18**

(21) Application number: **14877052.2**

(22) Date of filing: **16.12.2014**

(51) Int Cl.:
**G05D 13/62** *(2006.01)* **G07F 11/00** *(2006.01)*
**B65H 29/00** *(2006.01)* **G07F 19/00** *(2006.01)*

(86) International application number:
**PCT/CN2014/093919**

(87) International publication number:
**WO 2015/101174 (09.07.2015 Gazette 2015/27)**

(54) **PAPER MONEY TEMPORARY STORAGE MODULE, DRUM ROTATING SPEED CONTROL METHOD THEREOF AND AUTOMATIC TELLER MACHINE**

PAPIERGELDZWISCHENSPEICHERMODUL, TROMMELDREHZAHLSTEUERUNGSVERFAHREN DAFÜR UND GELDAUTOMAT

MODULE DE STOCKAGE TEMPORAIRE DE PAPIER-MONNAIE, SON PROCÉDÉ DE COMMANDE DE VITESSE DE ROTATION DE TAMBOUR, ET GUICHET AUTOMATIQUE BANCAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2013 CN 201310752248**

(43) Date of publication of application:
**09.11.2016 Bulletin 2016/45**

(73) Proprietor: **GRG Banking Equipment Co., Ltd.**
**Guangzhou City, Guangdong 510663 (CN)**

(72) Inventors:
• **CHEN, Qiaoqiao**
  **Guangzhou City**
  **Guangdong 510663 (CN)**
• **LI, Zhe**
  **Guangzhou City**
  **Guangdong 510663 (CN)**
• **HE, Yunfei**
  **Guangzhou City**
  **Guangdong 510663 (CN)**
• **WANG, Zhenguang**
  **Guangzhou City**
  **Guangdong 510663 (CN)**

(74) Representative: **LKGLOBAL**
**Lorenz & Kopf PartG mbB Patentanwälte**
**Brienner Straße 11**
**80333 München (DE)**

(56) References cited:
EP-A2- 2 428 938        CN-A- 101 331 076
CN-A- 102 542 664       CN-A- 102 930 638
CN-A- 102 930 638       CN-A- 103 676 990
DE-A1- 4 139 587        JP-A- 2001 341 709
JP-A- 2004 262 571      US-A1- 2003 223 768
US-A1- 2004 086 299     US-A1- 2004 173 708
US-A1- 2012 104 015

**Description**

**BACKGROUND**

An automatic cash recycling system includes a temporary storage module, which temporarily stores a banknote during a transaction process. A temporary storage module commonly used nowadays generally adopts a reel/tape structure including a first power motor, a second power motor, a large reel driven by the first power motor, a small reel driven by the second motor power, the tape and a microcontroller, where two ends of the tape are fixed on the large reel and the small reel respectively, the tape is deployed and retracted between the large reel and the small reel, and the microcontroller controls the first power motor and the second power motor to start or stop. Such a temporary storage module temporarily stores the banknote through cooperation of the reel with the tape.

An operation process is as follows. In a case that the banknote is to be put into the temporary storage module, a first start instruction is sent by the microcontroller to start the first power motor to rotate in a forward direction and start the second power motor to rotate in a backward direction, and the tape is retracted by the large reel and is deployed by the small reel, so that the banknote is stored into the temporary storage module by the reels and the tape. After a preset operation time t, a stop instruction is sent by the microcontroller to stop the first power motor and the second power motor in a case that no new banknote is to be put into the temporary storage module. In a case that a banknote is to leave the temporary storage module, a start instruction is sent by the microcontroller to start the first power motor to rotate in a backward direction and start the second power motor to rotate in a forward direction, the tape is deployed by the large reel and is retracted by the small reel, so that the banknote is sent out from the temporary storage module by the reels and the tape. In a case that all banknotes in the temporary storage module are sent out, a stop instruction is sent by the microcontroller to stop the first power motor and the second power motor. When the banknote enters the temporary storage module, the tape may be easily loosened in a case that a line speed of the small reel is greater than a line speed of the large reel, otherwise, the belt may be tightened in a case that the line speed of the small reel is less than the line speed of the large reel. Similarly, when the banknote leaves the temporary storage module, the tape may be easily loosened in a case that a line speed of the large reel is greater than a line speed of the small reel, otherwise, the tape may be tightened in a case that a line speed of the large reel is less than a line speed of the small reel. Tape looseness is prone to a banknote jam and a fault of a device, thereby increasing manual maintenance work. Tape tightness is prone to tape damage, and is prone to hardware circuit damage due to increased loads of the motors, thereby resulting in a fault of the device and increased manual maintenance work.

During operation of the device, it is required to keep a banknote conveying speed of the tape and a banknote conveying speed of other banknote conveying passage to be constant and consistent. Based on the circular motion principle, line speed V=angular speed $\omega$* radius r, thus it is required to keep the line speeds of the large reel and the small reel to be constant, so as to keep the banknote conveying speed of the tape to be constant. As the tape is deployed and retracted between the large reel and the small reel, radiuses of the large reel and the small reel vary continuously, thus it is required to adjust angular speeds of the first power motor and the second power motor timely based on variations of the radiuses of the large reel and the small reel. At present, in a method for controlling rotational speeds of the reels of the temporary banknote storage module, angular speeds of the reels and amount of banknotes are detected by a sensor, the line speeds are obtained through dynamically calculating the radiuses of the reels, and then the angular speeds of the motors corresponding to the reels are adjusted. After one rotation, an increment of the radius of the small reel is constant, which is equal to a thickness of the tape. Since tapes with different specifications differ in thickness, the temporary storage module has poor adaptability to the tapes with different thicknesses. After one rotation, an increment $\Delta X$ of the radius of the large reel is equal to the sum of a thickness of the tape plus a thickness of the banknote. Distances between banknotes as well as thicknesses of different banknotes are not uniform, thus $\Delta X$ cannot be accurately obtained through calculation, i.e., a rotational radius of the large reel cannot be accurately calculated after the banknote enters the large reel. Therefore, the obtained line speeds of the large reel and the small reel are not accurate, which further leads to large errors in the angular speeds of the first power motor and the second power motor. In this case, the line speeds of the large reel and the small reel are not constant, which leads to different line speeds of the large reel and the small reel. In a case that there is a large deviation between line speeds of the large reel and the small reel, the tape is prone to looseness, or, the hardware circuit is prone to damage due to increased loads of the motors, thereby resulting in a fault of the device and increased manual maintenance work.

Patent Document CN102930638 (A) discloses a banknote temporary storage module and a reel rotating speed control method thereof. The banknote temporary storage module includes a large reel driven by a first power motor, a small reel driven by a second power motor, a coiling tape, a first coded disc, a second coded disc, a first sensor, a second sensor and a microcontroller. Two ends of the coiling tape are separately fixed on the large reel and the small reel and the coiling tape is retracted and wound between the large reel and the small reel. The first coded disc is fixed on a rotating shaft of the large reel. The second coded disc is fixed on a rotating shaft of the small reel. The first sensor is arranged corresponding to the first coded disc and is used for monitoring the rotating angle of the large reel. The second sensor is arranged corresponding to the first coded disc and is used for monitoring the rotating angle of the large reel. The second sensor is arranged corresponding to the second coded disc and is used for monitoring the rotating angle of the small reel. The microcontroller is used for calculating, according to output signals of the first sensor and the second sensor, the length of the coil tape released by the small reel each time the large reel rotates for one circle, and further calculating the current radius of the large reel, and thus angular velocities of the large reel and the small reel are controlled and the linear velocity of the large reel is enabled to be consistent with that of the small reel.

## SUMMARY

In view of this, a temporary banknote storage module and a method for controlling rotational speeds of reels thereof are provided in the present disclosure, so as to obtain expected line speeds of a large reel and a small reel, which are constant and are output through accurate control.

To achieve the above objective, the following technical solutions are provided.

A method for controlling rotational speeds of reels of a temporary banknote storage module, including:

counting the number of identifiers detected by a first sensor corresponding to a large reel in a preset time period during operation of the temporary banknote storage module, and recording the number of identifiers detected by the first sensor as a first identifier number, where the identifiers are uniformly arranged in a longitudinal direction of a tape;

counting the number of identifiers detected by a second sensor corresponding to a small reel in the preset time period, and recording the number of identifiers detected by the second sensor as a second identifier number;

calculating a line speed of the large reel and a line speed of the small reel, based on the preset time period, the first identifier number, the second identifier number and a distance between the identifiers; and

substituting the line speed of the large reel, the line speed of the small reel and an expected line speed into a PID algorithm, to calculate a first angular speed and a second angular speed, adjusting a rotational speed of a first power motor corresponding to the large reel to be the first angular speed, and adjusting a rotational speed of a second power motor corresponding to the small reel to be the second angular speed.

Preferably, in the method for controlling the rotational speeds of the reels of the temporary banknote storage module described above, the first angular speed and the second angular speed are calculated in the following step:

calculating the first angular speed and the second angular speed based on an equation:

$$u(t) = K_P[e(t) + \frac{1}{T_I}\int_0^t e(t)dt + \frac{T_D de(t)}{dt}]$$

,

where the e(t)= r(t)- y(t) is a control error of a system, the r(t) is the expected line speed, the y(t) is the line speed of the large reel or an actual line speed of the small reel, the $K_p$ is a proportional coefficient, the $T_I$ is an integration time constant, and the $T_D$ is a derivative time constant.

Preferably, in the method for controlling the rotational speeds of the reels of the temporary banknote storage module described above, the identifiers include stripes arranged at uniform intervals in the longitudinal direction of the tape.

Preferably, the method for controlling the rotational speeds of the reels of the temporary banknote storage module described above may further include:

comparing, the calculated line speed of the large reel and the calculated line speed of the small reel, with the expected line speed respectively, and controlling the temporary banknote storage module to stop operating in a case that a difference between the line speed of the large reel and the expected line speed or a difference between the line speed of the small reel and the expected line speed is greater than a preset value.

Preferably, the method for controlling the rotational speeds of the reels of the temporary banknote storage module described above may further include:

detecting magnitude of tension of the tape, and controlling the temporary banknote storage module to stop operating in a case that the tension of the tape is larger than a maximum preset tension or the tension of the tape is smaller than a minimum preset tension.

A temporary banknote storage module is provided. The temporary banknote storage module includes a first power motor, a second power motor, a large reel driven by the first power motor and a small reel driven by the second power motor. The temporary banknote storage module may further include:

> a tape, where two ends of the tape are fixed on the large reel and the small reel respectively, and identifier information are uniformly arranged on surfaces of the tape in a longitudinal direction of the tape;
> a first sensor corresponding to the large reel, configured to detect the identifier information on the tape retracted or deployed by the large reel and output one piece of first identifier information each time one piece of identifier information is detected;
> a second sensor corresponding to the small reel, configured to detect the identifier information on the tape retracted or deployed by the small reel and output one piece of second identifier information each time one piece of identifier information is detected; and
> a microcontroller, configured to count the number of pieces of first identifier information obtained in a preset time, record the number of pieces of first identifier information as a first identifier number, count the number of pieces of second identifier information obtained in the preset time, record the number of pieces of second identifier information as a second identifier number, calculate a line speed of the large reel and a line speed of the small reel based on the preset time, the first identifier number, the second identifier number and a distance between the pieces of identifier information, obtain a first angular speed corresponding to the first power motor and a second angular speed corresponding to the second power motor based on an expected line speed and a PID algorithm, adjust a rotational speed of the first power motor corresponding to the large reel to be the first angular speed, and adjust a rotational speed of the second power motor corresponding to the small reel to be the second angular speed.

Preferably, in the temporary banknote storage module described above, the microcontroller includes a first PID algorithm module and a second PID algorithm module.
The first PID algorithm module is configured to calculate a first angular speed based on an equation:

$$u_1(t) = K_P[e_1(t) + \frac{1}{T_I}\int_0^t e_1(t)dt + \frac{T_D de_1(t)}{dt}]$$ where the e1(t)= r(t)- y1(t) is a control error of the large reel of a system, the r(t) is the expected line speed, the y1(t) is the line speed of the large reel, the $K_p$ is a proportional coefficient, the $T_I$ is an integration time constant, and the $T_D$ is a derivative time constant.
The second PID algorithm module is configured to calculate a second angular speed based on an equation:

$$u_2(t) = K_P[e_2(t) + \frac{1}{T_I}\int_0^t e_2(t)dt + \frac{T_D de_2(t)}{dt}]$$ where the e2(t)= r(t)- y2(t) is a control error of the small reel of the system, and y2(t) is the line speed of the small reel.
Preferably, in the temporary banknote storage module described above, the tape includes:
a tape, where two ends of the tape are fixed on the large reel and the small reel, strips are arranged on surfaces of the tape in a longitudinal direction of the tape, and the strips are identifier information of the tape.
Preferably, in the temporary banknote storage module described above, the microcontroller further includes:
a speed comparison module, configured to compare the calculated line speed of the large reel and the calculated line speed of the small reel with the expected line speed, and control the temporary banknote storage module to stop operating in a case that a difference between the line speed of the large reel and the expected line speed or a difference between the line speed of the small reel and the expected line speed is greater than a preset value.
Preferably, the temporary banknote storage module described above further includes:

> a tester for tension of the tape, configured to detect magnitude of the tension of the tape; where
> the temporary banknote storage module is controlled to stop operating in a case that the microcontroller detects that the tension of the tape is larger than a maximum preset tension or the tension of the tape is smaller than a minimum preset tension.

An automatic teller machine is provided. The automatic teller machine may include any one of the temporary banknote storage modules described above.
It can be seen from the above technical solutions that, in the method for controlling the rotational speeds of the reels of the temporary banknote storage module in the present disclosure, the number of pieces of passed identifier information on the tape in a unit of time is detected, and the line speeds of the large reel and the small reel are calculated.

Then the first angular speed and the second angular speed are calculated based on the expected line speed and the PID algorithm, and the first power motor corresponding to the large reel and the second power motor corresponding to the small reel are respectively controlled based on the first angular speed and the second angular speed. It can be seen that, in the technical solutions according to above embodiments of the present disclosure, calculations of the line speeds of the large reel and the small reel are not affected by a thickness of the tape, a thickness of a banknote and radiuses of the reels, thus the accurate line speeds of the large reel and the small reel can be obtained, thereby keeping the line speeds of the large reel and the small reel constant.

**BRIEF DESCRIPTION OF THE DRAWINGS**

In order to more clearly illustrate technical solutions in embodiments of the present disclosure or in the conventional technology, drawings used in the description of the embodiments or the conventional technology are introduced briefly hereinafter. Apparently, the drawings described in the following merely illustrates some embodiments of the present disclosure, other drawings may be obtained by those ordinarily skilled in the art based on these drawings without any creative efforts.

Figure 1 is a flow chart of a method for controlling rotational speeds of reels of a temporary banknote storage module according to an embodiment of the present disclosure;

Figure 2 is a structural diagram of a temporary banknote storage module according to an embodiment of the present disclosure;

Figure 3 is a diagram of a control principle for a temporary banknote storage module according to an embodiment of the present disclosure;

Figure 4 is a diagram of identifier information on surfaces of a tape according to an embodiment of the present disclosure; and

Figure 5 is a diagram of a tape according to an embodiment of the present disclosure.

**DETAILED DESCRIPTION**

The technical solutions of embodiments of the present disclosure are clearly and completely described hereinafter in conjunction with the drawings of the embodiments of the present disclosure. Apparently, the described embodiments are only a few of rather than all of the embodiments of the present disclosure. Based on the embodiments of the present disclosure, all other embodiments obtained by those ordinarily skilled in the art without any creative efforts fall within the protection scope of the present disclosure.

In order to obtain expected line speeds of a large reel and a small reel, which are constant and are output through accurate control, a method for controlling rotational speeds of the reels of a temporary banknote storage module is provided in the present disclosure. The control method is a closed-loop control method.

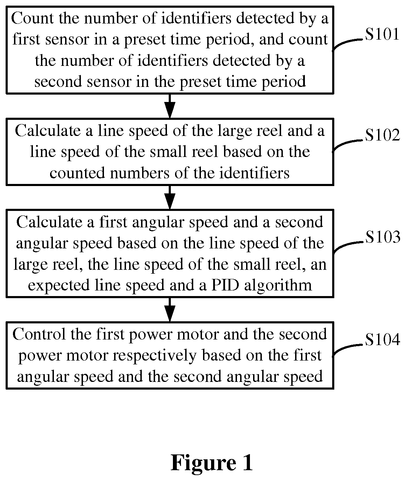

Figure 1 is a flow chart of a method for controlling rotational speeds of reels of a temporary banknote storage module according to an embodiment of the present disclosure.

The method for controlling the rotational speeds of the reels of the temporary banknote storage module according to the embodiment of the present disclosure is described hereinafter in conjunction with Figure 1.

Reference is made to Figure 1, the method for controlling the rotational speeds of the reels of the temporary banknote storage module according to the embodiment of the present disclosure includes steps S101 to S104.

In step S101, the number of identifiers detected by a first sensor in a preset time period is counted, and the number of identifiers detected by a second sensor in the preset time period is counted.

Specifically, the step may include the following. The number of identifiers corresponding to a large reel detected by the first sensor in the preset time period is counted and recorded as a first identifier number, during operation of the temporary banknote storage module, where the identifiers are uniformly arranged in a longitudinal direction of a tape.

During operation of the temporary banknote storage module, the large reel rotates driven by a first power motor, the small reel rotates driven by a second power motor, where pieces of identifier information are uniformly arranged on surfaces of the tape in the longitudinal direction of the tape. The first sensor corresponding to the large reel detects whether there is identifier information, on the tape retracted or deployed by the large reel, passing through a detection region of the first sensor. One first pulse signal may be outputted each time there is one piece of identifier information passing through the detection region of the first sensor. The number of first pulse signals obtained in the preset time period is counted, so that the number of pieces of identifier information arranged on the tape deployed or retracted by the large reel in the preset time period may be obtained and recorded as the first identifier number.

In the meantime, the second sensor corresponding to the small reel detects whether there is identifier information, on the tape retracted or deployed by the small reel, passing through a detection region of the second sensor. One second pulse signal may be outputted each time there is one piece of identifier information passing through the detection region of the second sensor. The number of second pulse signals obtained in the preset time period is counted, so that the number of pieces of identifier information arranged on the tape deployed or retracted by the small reel in the preset time period may be obtained and recorded as a second identifier number.

In step S102, a line speed of the large reel and a line speed of the small reel are calculated based on the counted numbers of the identifiers.

Specifically, the step may include: calculating the line speed of the large reel and the line speed of the small reel based on the preset time period, the first identifier number, the second identifier number and a distance between the identifiers.

It is assumed that the preset time period is Is, the number of pieces of identifier information that have passed the detection region of the first sensor in Is is N, the number of pieces of identifier information that have passed the detection region of the second sensor in Is is P, and the distance between the pieces of identifier information is D. For calculation of the line speed of the large reel, there are two cases.

> ① A width of the piece of identifier information may be ignored.
> In this case, the line speed of the large reel is y1(t)=(N-1)*D, and
> the line speed of the small reel is y2(t)=(P-1)*D.
> ② A width of the piece of identifier information is W.
> In this case, the line speed of the large reel is y1(t)=(N-1)*(W+D), and
> the line speed of the small reel is y2(t)=(P-1)*(W+D).

It can be understood that, corresponding equations for calculating the line speeds of the large reel and the small reel may be stored in the temporary banknote storage module by those skilled in the art based on different widths of the pieces of identifier information.

In step S103, a first angular speed and a second angular speed are calculated based on the line speed of the large reel, the line speed of the small reel, an expected line speed and a PID algorithm.

Specifically, the step may include: calculating the first angular speed based on the line speed of the large reel, the expected line speed and the PID algorithm, and calculating the second angular speed based on the line speed of the small reel, the expected line speed and the PID algorithm.

In step S104, the first power motor and the second power motor are respectively controlled based on the first angular speed and the second angular speed.

Specifically, the step may include: controlling a rotational speed of the first power motor corresponding to the large reel based on the first angular speed, to change an angular speed of the first power motor to the first angular speed; and controlling a rotational speed of the second power motor corresponding to the small reel based on the second angular speed, to change an angular speed of the second power motor to the second angular speed.

It can be seen from the above method that, based on the technical solution according to the above embodiment of the present disclosure, the number of passed pieces of identifier information on the tape in a unit of time is detected, and the line speeds of the large reel and the small reel are calculated. Then the first angular speed and the second angular speed are calculated based on the expected line speed and the PID algorithm, and the first power motor corresponding to the large reel and the second power motor corresponding to the small reel are respectively controlled based on the first angular speed and the second angular speed. It can be seen that, in the technical solution according to above embodiment of the present disclosure, calculations of the line speeds of the large reel and the small reel are not affected by a thickness of the tape, a thickness of a banknote and radiuses of the reels, thus the accurate line speeds of the large reel and the small reel may be obtained, and the line speeds of the large reel and the small reel may be kept constant.

It can be understood that, in the above step S103, the calculating the first angular speed and the second angular speed based on the line speed of the large reel, the line speed of the small reel, the expected line speed and the PID algorithm may include: substituting e(t), $K_p$, $T_I$ and $T_D$ into equation (1) to calculate the first angular speed and the second angular speed:

$$u(t) = K_P[e(t) + \frac{1}{T_I}\int_0^t e(t)dt + \frac{T_D de(t)}{dt}]$$

(1)

where the e(t)= r(t)- y(t) is a control error of a system, the r(t) is the expected line speed, the y(t) is the line speed of the large reel or an actual line speed of the small reel, the $K_p$ is a proportional coefficient, the $T_I$ is an integration time constant, and the $T_D$ is a derivative time constant. It can be known that the line speed of the large reel and the line speed of the small reel are the actual line speeds of the large reel and the small reel respectively.

It can be understood that, the identifier information on the tape in the present disclosure may include stripes arranged at uniform intervals in the longitudinal direction of the tape, and the strips may include strips of linear shape or strips of other shape. It should be noted that the accuracy of the calculated line speeds of the large reel and the small reel increases with an increasing distribution density of the strips.

It can be understood that, in order to avoid a special case that the line speeds of the large reel and the small reel are much larger than the expected line speed but the rotational speeds of the first power motor and the second power motor can not be effectively changed by a control system, the method according to the above embodiment of the present disclosure may further include:

comparing, the calculated line speed of the large reel and the calculated line speed of the small reel, with the expected line speed respectively, and controlling the temporary banknote storage module to stop operating in a case that a difference between the line speed of the large reel and the expected line speed or a difference between the line speed of the small reel and the expected line speed is greater than a preset value.

It can be understood that, in order to avoid a tape damage due to tape tightening, or a banknote jam due to tape loosening, the method according to the above embodiment of the present disclosure may further include: detecting magnitude of tension of the tape in real time during the operation of the temporary banknote storage module, and controlling the temporary banknote storage module to stop operating in a case that the tension of the tape is larger than a maximum preset tension or the tension of the tape is smaller than a minimum preset tension. Of course, the method may alternatively include: in a case that the tension of the tape is larger than the maximum preset tension, reducing the angular speed corresponding to the first power motor based on a preset proportion if the large reel is retracting the tape and the small reel is deploying the tape, or reducing the angular speed corresponding to the second power motor based on a preset proportion if the small reel is retracting the tape and the large reel is deploying the tape; and in a case that the tension of the tape is smaller than the maximum preset tension, increasing the angular speed corresponding to the first power motor based on a preset proportion if the large reel is retracting the tape and the small reel is deploying the tape, or increasing the angular speed corresponding to the second power motor based on a preset proportion if the small reel is retracting the tape, and the large reel is deploying the tape.

Specifically, the method for detecting the tension may include applying pressure to the tape through a predetermined force at a hovering position on the tape, and calculating the tension of the tape based on magnitude of the predetermined force and a depth of the tape pressed down.

A temporary banknote storage module corresponding to the above method is further provided in the present disclosure.

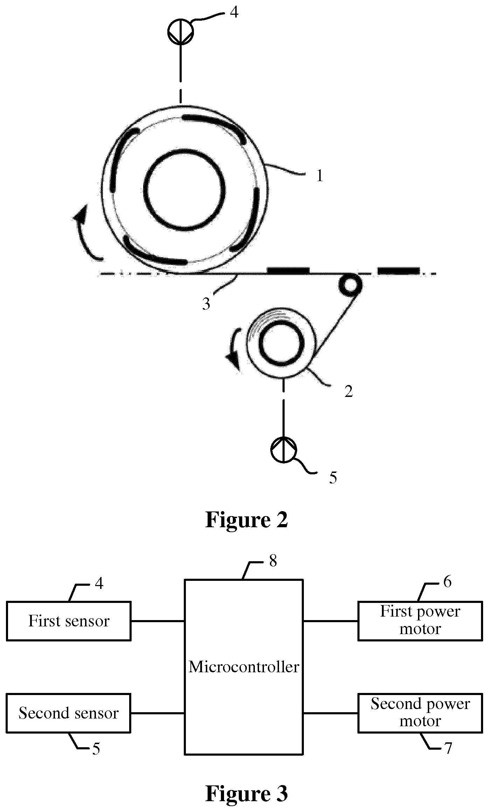

Figure 2 is a structural diagram of a temporary banknote storage module according to an embodiment of the present disclosure.

Figure 3 is a diagram of a control principle for the temporary banknote storage module according to an embodiment of the present disclosure.

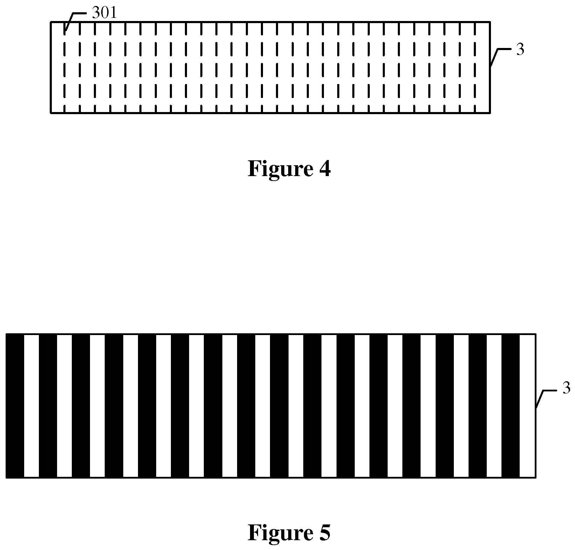

Figure 4 is a diagram of identifier information on surfaces of a tape in the present disclosure.

Referring to Figure 2, Figure 3 and Figure 4, the temporary banknote storage module according to the embodiment of the present disclosure may include a first power motor 6, a second power motor 7, a large reel 1 driven by the first power motor, a small reel 2 driven by the second power motor, a tape 3 of which two ends are fixed on the large reel 1 and the small reel 2 respectively, a first sensor 4 corresponding to the large reel 1, a second sensor 5 corresponding to the small reel 2, and a microcontroller 8.

The two ends of tape 3 are fixed on the large reel 1 and the small reel 2 respectively, and identifier information 301 are uniformly arranged on the surfaces of the tape 3 in a longitudinal direction. It can be understood that the identifier information is arranged on both surfaces of the tape.

The first sensor 6 corresponding to the large reel 1 is configured to detect the identifier information 301 on the tape 3 retracted or deployed by the large reel 1, and output one piece of first identifier information each time one piece of identifier information is detected, where the first identifier information may be a first pulse signal.

The second sensor 7 corresponding to the small reel 2 is configured to detect the identifier information 301 on the tape 3 retracted or deployed by the small reel 2, and output one piece of second identifier information each time one piece of identifier information is detected, where the second identifier information may be a second pulse signal.

The microcontroller 8 is configured to count the number of pieces of first identifier information obtained in a preset time, record the number of pieces of first identifier information as a first identifier number, count the number of pieces of second identifier information obtained in the preset time, record the number of pieces of second identifier information as a second identifier number, calculate a line speed of the large reel and a line speed of the small reel based on the preset time, the first identifier number, the second identifier number and a distance between the pieces of identifier information, obtain a first angular speed corresponding to the first power motor and a second angular speed corresponding to the second power motor based on an expected line speed and a PID algorithm, and adjust the first power motor and the second power motor based on the first angular speed and the second angular speed.

Referring to Figure 5, a diagram of a tape is shown according to an embodiment of the present disclosure.

Referring to Figure 5, black and white stripes of rectangular shape are arranged on surfaces of the tape, and the black strips or white strips may be selected as the identifier information.

It can be understood that, in the temporary banknote storage module according to the above embodiments of the present disclosure, the microcontroller may include a first PID algorithm module and a second PID algorithm module.

The first PID algorithm module is configured to calculate the first angular speed based on the following equation:

$$u_1(t) = K_P[e_1(t) + \frac{1}{T_I}\int_0^t e_1(t)dt + \frac{T_D de_1(t)}{dt}],$$ where the e1(t)= r(t)- y1(t) is a control error of the large reel of a system, the r(t) is the expected line speed, the y1(t) is the line speed of the large reel, the $K_p$ is a proportional coefficient, the $T_I$ is an integration time constant, and the $T_D$ is a derivative time constant.

The second PID algorithm module is configured to calculate the second angular speed based on the following

equation: $$u_2(t) = K_P[e_2(t) + \frac{1}{T_I}\int_0^t e_2(t)dt + \frac{T_D de_2(t)}{dt}],$$ where the e2(t)= r(t)- y2(t) is a control error of the small reel of the system, and y2(t) is the line speed of the small reel.

In the temporary banknote storage module according to the above embodiments of the present disclosure, the tape may include a tape, where two ends of the tape are fixed on the large reel and the small reel, strips are arranged at uniform intervals on surfaces of the tape in a longitudinal direction, and the strips are the identifier information of the tape.

It can be understood that the temporary banknote storage module according to the above embodiments of the present disclosure may further include: a speed comparison module, configured to compare the calculated line speed of the large reel and the calculated line speed of the small reel with the expected line speed, and control the temporary banknote storage module to stop operating in a case that the a difference between the line speed of the large reel and the expected line speed is greater than a preset value or a difference between the line speed of the small reel and the expected line speed is greater than the preset value.

It can be understood that the temporary banknote storage module according to the above embodiments of the present disclosure may further include a tester for tension of the tape. The tester for tension of the tape is configured to detect magnitude of the tension of the tape in real time during the operation of the temporary banknote storage module, and send a detected tension signal to the microcontroller. The microcontroller compares the tension with a maximum preset tension and with a minimum preset tension, and controls the temporary banknote storage module to stop operating in a case that the tension of the tape is larger than the maximum preset tension or the tension of the tape is smaller than the minimum preset tension. Of course, the microcontroller may operate alternatively in the following way. In a case that the tension of the tape is larger than the maximum preset tension, the microcontroller reduces the angular speed corresponding to the first power motor based on a preset proportion if the large reel is retracting the tape and the small reel is deploying the tape, or the microcontroller reduces the angular speed corresponding to the second power motor based on a preset proportion if the small reel is retracting the tape and the large reel is deploying the tape. In a case that the tension of the tape is smaller than the maximum preset tension, the microcontroller increases the angular speed corresponding to the first power motor based on a preset proportion if the large reel is retracting the tape and the small reel is deploying the tape, or the microcontroller increases the angular speed corresponding to the second power motor based on a preset proportion if the small reel is retracting the tape, and the large reel is deploying the tape.

Specifically, the tester for the tension of the tape is arranged above or below a hovering position of the tape, applies pressure to the tape through a preset force, and calculates the tension of the tape based on the preset force and a value of a depth of the tape pressed down.

It can be understood that, an automatic teller machine to which a temporary banknote storage module is applied is further provided in the present disclosure.

Finally, it should be noted that, relational terms in the present disclosure such as the first or the second are only used to differentiate one entity or operation from another entity or operation, rather than requiring or indicating the actual existence of the relation or sequence among the entities or operations. In addition, terms such as "include", "comprise" or any other variants are meant to cover non-exclusive enclosure, so that the process, method, item or device comprising a series of elements not only include the elements but also include other elements which are not specifically listed or the inherent elements of the process, method, item or device. With no more limitations, the element restricted by the phrase "include a..."does not exclude the existence of other same elements in the process, method, item or device including the element.

The embodiments of the present disclosure are described in a progressive way, each of the embodiments places the emphasis upon aspects in which it differs from the other embodiments, and for the same or similar parts of the embodiments, each of the embodiments may be referred to.

**Claims**

1. A method for controlling rotational speeds of reels of a temporary banknote storage module, comprising:

   counting (S101) the number of identifiers detected by a first sensor corresponding to a large reel in a preset time period, and recording the number of identifiers detected by the first sensor as a first identifier number, wherein the identifiers are uniformly arranged in a longitudinal direction of a tape;
   counting (S101) the number of identifiers detected by a second sensor corresponding to a small reel in the preset time period, and recording the number of identifiers detected by the second sensor as a second identifier number;
   calculating (S102) a line speed of the large reel and a line speed of the small reel based on the preset time period, the first identifier number, the second identifier number and a distance between the identifiers; and
   substituting (S103) the line speed of the large reel, the line speed of the small reel and an expected line speed into a PID algorithm, to calculate a first angular speed and a second angular speed, adjusting a rotational speed of a first power motor corresponding to the large reel to be the first angular speed, and adjusting (S104) a rotational speed of a second power motor corresponding to the small reel to be the second angular speed.

2. The method according to claim 1, wherein the first angular speed and the second angular speed are calculated in the following step:

   calculating the first angular speed and the second angular speed based on an equation:

$$u(t) = K_P [ e(t) + \frac{1}{T_I} \int_0^t e(t) dt + \frac{T_D de(t)}{dt} ]$$
,

   wherein the e(t)= r(t)- y(t) is a control error of a system, the r(t) is the expected line speed, the y(t) is the line speed of the large reel or an actual line speed of the small reel, the $K_p$ is a proportional coefficient, the $T_I$ is an integration time constant, and the $T_D$ is a derivative time constant.

3. The method according to claim 1, wherein the identifiers comprise stripes arranged at uniform intervals in the longitudinal direction of the tape.

4. The method according to claim 1, further comprising:
   comparing, the calculated line speed of the large reel and the calculated line speed of the small reel, with the expected line speed respectively, and controlling the temporary banknote storage module to stop operating in a case that a difference between the line speed of the large reel and the expected line speed or a difference between the line speed of the small reel and the expected line speed is greater than a preset value.

5. The method according to claim 1, further comprising:
   detecting magnitude of tension of the tape, and controlling the temporary banknote storage module to stop operating in a case that the tension of the tape is larger than a maximum preset tension or the tension of the tape is smaller than a minimum preset tension.

6. A temporary banknote storage module, comprising: a first power motor (6), a second power motor (7), a large reel (1) driven by the first power motor (6) and a small reel (2) driven by the second power motor (7), and a tape (3), wherein two ends of the tape (3) are fixed on the large reel (1) and the small reel (2) respectively, **characterized in that** identifier information are uniformly arranged on surfaces of the tape (3) in a longitudinal direction of the tape (3), and the temporary banknote storage module further comprises:

a first sensor (4) corresponding to the large reel (1), configured to detect the identifier information on the tape (3) retracted or deployed by the large reel (1) and output one piece of first identifier information each time one piece of identifier information is detected;
a second sensor (5) corresponding to the small reel (2), configured to detect the identifier information on the tape (3) retracted or deployed by the small reel (2) and output one piece of second identifier information each time one piece of identifier information is detected; and
a microcontroller (8), configured to count the number of pieces of first identifier information obtained in a preset time, record the number of pieces of first identifier information as a first identifier number, count the number of pieces of second identifier information obtained in the preset time, record the number of pieces of second identifier information as a second identifier number, calculate a line speed of the large reel (1) and a line speed of the small reel (2) based on the preset time, the first identifier number, the second identifier number and a distance between the pieces of identifier information, obtain a first angular speed corresponding to the first power motor (6) and a second angular speed corresponding to the second power motor (7) based on an expected line speed and a PID algorithm, adjust a rotational speed of the first power motor (6) corresponding to the large reel (1) to be the first angular speed, and adjust a rotational speed of the second power motor (7) corresponding to the small reel (2) to be the second angular speed.

7. The temporary banknote storage module according to claim 6, wherein the microcontroller (8) comprises:

a first PID algorithm module, configured to calculate the first angular speed based on an equation:

$$u_1(t) = K_P \left[ e_1(t) + \frac{1}{T_I} \int_0^t e_1(t)\,dt + \frac{T_D \, de_1(t)}{dt} \right]$$

wherein the $e_1(t) = r(t) - y_1(t)$ is a control error of the large reel (1) of a system, the $r(t)$ is the expected line speed, the $y_1(t)$ is the line speed of the large reel (1), the $K_p$ is a proportional coefficient, the $T_I$ is an integration time constant, and the $T_D$ is a derivative time constant; and
a second PID algorithm module, configured to calculate the second angular speed based on an equation:

$$u_2(t) = K_P \left[ e_2(t) + \frac{1}{T_I} \int_0^t e_2(t)\,dt + \frac{T_D \, de_2(t)}{dt} \right]$$

wherein the $e_2(t) = r(t) - y_2(t)$ is a control error of the small reel (2) of the system, and the $y_2(t)$ is the line speed of the small reel (2).

8. The temporary banknote storage module according to claim 6, wherein the microcontroller (8) further comprises:
a speed comparison module, configured to compare the calculated line speed of the large reel (1) and the calculated line speed of the small reel (2) with the expected line speed, and control the temporary banknote storage module to stop operating in a case that the a difference between the line speed of the large reel (1) and the expected line speed or a difference between the line speed of the small reel (2) and the expected line speed is greater than a preset value.

9. The temporary banknote storage module according to claim 6, further comprising:

a tester for tension of the tape (3), configured to detect magnitude of the tension of the tape (3), wherein the temporary banknote storage module is controlled to stop operating in a case that the microcontroller (8) detects that the tension of the tape (3) is larger than a maximum preset tension or the tension of the tape (3) is smaller than a minimum preset tension.

10. An automatic teller machine, wherein the automatic teller machine comprises a temporary banknote storage module according to any one of claims 6-9.

**Patentansprüche**

1. Ein Verfahren zum Steuern von Drehgeschwindigkeiten von Spulen eines temporären Banknotenspeichermoduls, wobei das Verfahren umfasst:

Zählen (S101) der Anzahl von Identifikatoren, die in einer voreingestellten Zeitspanne mittels eines ersten Sensors, der sich auf eine große Spule bezieht, erkannt werden, und Aufnehmen der Anzahl der Identifikatoren, die durch den ersten Sensor erkannt werden, als erste Identifikatoren-Anzahl, wobei die Identifikatoren einheitlich in longitudinaler Richtung auf einem Band angeordnet sind;

Zählen (S101) der Anzahl von Identifikatoren, die in einer voreingestellten Zeitspanne mittels eines zweiten Sensors, der sich auf eine kleine Spule bezieht, erkannt werden, und Aufnehmen der Anzahl der Identifikatoren, die durch den zweiten Sensor erkannt werden, als zweite Identifikatoren-Anzahl;

Berechnen (S102) einer Bandgeschwindigkeit der großen Spule und einer Bandgeschwindigkeit der kleinen Spule basierend auf der vorangestellten Zeitspanne, der ersten Identifikatoren-Anzahl, der zweiten Identifikatoren-Anzahl und dem Abstand zwischen den Identifikatoren; und

Ersetzen (S103) der Bandgeschwindigkeit der großen Spule, der Bandgeschwindigkeit der kleinen Spule und einer erwarteten Bandgeschwindigkeit in einem PID Algorithmus, um eine erste Winkelgeschwindigkeit und eine zweite Winkelgeschwindigkeit zu berechnen, Anpassen der Drehgeschwindigkeit eines ersten Antriebsmotors, der sich auf die große Spule bezieht, auf die erste Winkelgeschwindigkeit, und Anpassen (S104) einer Drehgeschwindigkeit eines zweiten Antriebsmotors, der sich auf die kleine Spule bezieht, auf die zweite Winkelgeschwindigkeit.

2. Verfahren nach Anspruch 1, wobei die erste Winkelgeschwindigkeit und die zweite Winkelgeschwindigkeit in den folgenden Schritten berechnet werden:

Berechnen der ersten Winkelgeschwindigkeit und der zweiten Winkelgeschwindigkeit basierend auf einer Gleichung:

$$u(t) = K_P[e(t) + \frac{1}{T_I}\int_0^t e(t)dt + \frac{T_D de(t)}{dt}] \, ,$$

wobei e(t)= r(t)- y(t) ein Steuerungsfehler eines Systems ist, r(t) die erwartete Bandgeschwindigkeit ist, y(t) die Bandgeschwindigkeit der großen Spule oder eine momentane Bandgeschwindigkeit der kleinen Spule ist, $K_p$ ein proportionaler Koeffizient ist, $T_I$ eine Integrationszeitkonstante ist und $T_D$ eine Ableitungszeitkonstante ist.

3. Das Verfahren nach Anspruch 1, wobei die Identifikatoren Streifen aufweisen, die in einheitlichen Intervallen entlang der longitudinalen Richtung auf dem Band angeordnet sind.

4. Das Verfahren nach Anspruch 1, weiter aufweisend:
Vergleichen der berechneten Bandgeschwindigkeit der großen Spule und der berechneten Bandgeschwindigkeit der kleinen Spule mit der jeweiligen erwarteten Bandgeschwindigkeit, und Steuern des temporären Banknotenspeichermoduls, um den Betrieb zu stoppen, wenn ein Unterschied zwischen der Bandgeschwindigkeit der großen Spule und der erwarteten Bandgeschwindigkeit oder ein Unterschied zwischen der Bandgeschwindigkeit der kleinen Spule und der erwarteten Bandgeschwindigkeit größer als ein vorbestimmter Wert ist.

5. Das Verfahren nach Anspruch 1, weiter aufweisend:
Erkennen einer Größenordnung einer Spannung des Bandes, und Steuern des temporären Banknotspeichermoduls, um den Betrieb zu stoppen, wenn die Spannung des Bandes größer ist als eine maximale vorbestimmte Spannung oder die Spannung des Bandes kleiner ist als eine minimale vorbestimmte Spannung.

6. Ein temporäres Banknotenspeichermodul aufweisend: einen ersten Antriebsmotor (6), einen zweiten Antriebsmotor (7), eine große Spule (1), die durch den ersten Antriebsmotor (6) angetrieben wird, und eine kleine Spule (2), die durch den zweiten Antriebsmotor (7) angetrieben wird, und ein Band (3), wobei eines der zwei Enden des Bands (3) an der großen Spule (1) und das andere der zwei Enden des Bands (3) an der kleinen Spule (2) befestigt ist, **dadurch gekennzeichnet, dass** Identifikatoren-Informationen einheitlich auf Oberflächen des Bandes (3) in einer longitudinalen Richtung des Bandes (3) angeordnet sind, und das temporäre Banknotenspeichermodul weiter aufweist:

einen ersten Sensor (4), der sich auf die große Spule (1) bezieht, zum Erfassen der Identifikatoren-Informationen auf dem Band (3), das durch die große Spule (1) aufgewickelt oder abgewickelt wird und einen Teil einer ersten Identifikatoren-Information ausgibt, wobei jedes Mal ein Teil der Identifikatoren-Information erfasst wird;

einen zweiten Sensor (5), der sich auf die kleine Spule (2) bezieht, zum Erfassen der Identifikatoren-Informationen auf dem Band (3), das durch die kleine Spule (2) aufgewickelt oder abgewickelt wird und einen Teil einer zweiten Identifikatoren-Information ausgibt, wobei jedes Mal ein Teil der Identifikatoren-Information erfasst wird; und

ein Mikrocontroller (8), der ausgebildet ist zum Zählen der Anzahl der Teile der ersten Identifikatoren-Information, die in einer vorgegebenen Zeit erhalten wurden, zum Aufnehmen der Anzahl der Teile der ersten Identifikatoren-Information als eine erste Identifikatoren-Anzahl, zum Zählen der Anzahl der Teile der zweiten Identifikatoren-Information, die in einer vorgegebenen Zeit erhalten wurden, zum Aufnehmen der Anzahl der Teile der zweiten Identifikatoren-Information als eine zweite Identifikatoren-Anzahl, zum Berechnen (S102) einer Bandgeschwindigkeit der großen Spule und einer Bandgeschwindigkeit der kleinen Spule basierend auf der vorbestimmten Zeitspanne, der ersten Identifikatoren-Anzahl, der zweiten Identifikatoren-Anzahl und dem Abstand zwischen den Teilen der Identifikatoren-Information, zum Erhalten einer ersten Winkelgeschwindigkeit, die sich auf den ersten Antriebsmotor (6) bezieht, und einer zweiten Winkelgeschwindigkeit, die sich auf den zweiten Antriebsmotor (7) bezieht, basierend auf einer erwarteten Bandgeschwindigkeit und einem PID Algorithmus, zum Einstellen einer Drehgeschwindigkeit des ersten Antriebsmotor (6), der sich auf die große Spule (1) bezieht, als erste Winkelgeschwindigkeit, und zum Einstellen einer Drehgeschwindigkeit des zweiten Antriebsmotor (7), der sich auf die kleine Spule (2) bezieht, als zweite Winkelgeschwindigkeit.

7. Ein temporäres Banknotenspeichermodul nach Anspruch 6, wobei der Mikrocontroller (8) aufweist:

ein erstes PID Algorithmus Modul, das zum Berechnen der ersten Winkelgeschwindigkeit basierend auf einer

Gleichung $u_1(t) = K_P\left[e_1(t) + \dfrac{1}{T_I}\displaystyle\int_0^t e_1(t)dt + \dfrac{T_D de_1(t)}{dt}\right]$ ausgebildet ist, wobei e1(t)= r(t)- y1(t) der Steuerungsfehler der großen Spule (1) des Systems ist, r(t) die erwartete Bandgeschwindigkeit ist, y1(t) die Bandgeschwindigkeit der großen Spule (1) ist, $K_p$ ein proportionaler Koeffizient ist, $T_I$ eine Indikationszeitkonstante ist, $T_D$ eine Ableitungszeitkonstante ist; und

ein zweites PID Algorithmus Modul, das zum Berechnen der zweiten Winkelgeschwindigkeit basierend auf einer Gleichung:

$$u_2(t) = K_P\left[e_2(t) + \dfrac{1}{T_I}\int_0^t e_2(t)dt + \dfrac{T_D de_2(t)}{dt}\right]$$ ausgebildet ist, wobei e2(t)= r(t)- y2(t) einen Steuerungsfehler der kleinen Spule (2) zu des Systems ist, und y2(t) die Bandgeschwindigkeit der kleinen Spule (2) ist.

8. Das temporäre Banknotenspeichermodul nach Anspruch 6, wobei der Mikrocontroller (8) weiter aufweist:
ein Geschwindigkeitsvergleich-Modul, das zum Vergleichen der berechneten Bandgeschwindigkeit der großen Spule (1) und der berechneten Bandgeschwindigkeit der kleinen Spule (2) mit der erwarteten Bandgeschwindigkeit, und zum Steuern des temporären Banknotenspeichermoduls, um den Betrieb zu stoppen ausgebildet ist, wenn ein Unterschied zwischen der Bandgeschwindigkeit der großen Spule (1) und der erwarteten Bandgeschwindigkeit oder ein Unterschied zwischen der Bandgeschwindigkeit der kleinen Spule (2) und der erwarteten Bandgeschwindigkeit größer als ein vorbestimmter Wert ist.

9. Das temporäre Banknotenspeichermodul nach Anspruch 6, weiter aufweisend:
einen Tester zum Testen der Spannung des Bandes (3), der ausgebildet ist, eine Größenordnung der Spannung des Bandes (3) zu erfassen, wobei das temporäre Banknotenspeichermodul gesteuert wird, den Betrieb zu stoppen, wenn der Mikrocontroller (8) eine Spannung des Bandes (3) erfasst, die größer ist als eine maximale vorgegebene Spannung oder eine Spannung des Bandes (3) erfasst, die kleiner ist als eine minimale vorgegebene Spannung.

10. Ein Geldausgabeautomat, wobei der Geldausgabeautomat ein temporäres Banknotenspeichermodul gemäß einem der Ansprüche 6-9 aufweist.

**Revendications**

1. Procédé de commande de vitesses de rotation de bobines d'un module de stockage temporaire de billets de banque, comprenant de :

   compter (S101) le nombre d'identificateurs détectés par un premier capteur correspondant à une grande bobine dans une période de temps prédéfinie, et enregistrer le nombre d'identificateurs détectés par le premier capteur en tant que premier nombre d'identificateurs, dans lequel les identificateurs sont agencés uniformément dans une direction longitudinale d'une bande ;
   compter (S101) le nombre d'identificateurs détectés par un second capteur correspondant à une petite bobine dans la période de temps prédéfinie, et enregistrer le nombre d'identificateurs détectés par le second capteur en tant que second nombre d'identificateurs ;
   calculer (S 102) une vitesse de ligne de la grande bobine et une vitesse de ligne de la petite bobine sur la base de la période de temps prédéfinie, du premier nombre d'identificateurs, du second nombre d'identificateurs et d'une distance entre les identificateurs ; et
   substituer (S103) la vitesse de ligne de la grande bobine, la vitesse de ligne de la petite bobine et une vitesse de ligne attendue dans un algorithme PID, pour calculer une première vitesse angulaire et une seconde vitesse angulaire, régler une vitesse de rotation d'un premier moteur électrique correspondant à la grande bobine pour qu'elle soit la première vitesse angulaire, et régler (S104) une vitesse de rotation d'un second moteur électrique correspondant à la petite bobine pour qu'elle soit la seconde vitesse angulaire.

2. Procédé selon la revendication 1, dans lequel la première vitesse angulaire et la seconde vitesse angulaire sont calculées dans l'étape suivante consistant à :

   calculer la première vitesse angulaire et la seconde vitesse angulaire sur la base d'une équation :

$$u(t) = K_P [e(t) + \frac{1}{T_I} \int_0^t e(t)dt + \frac{T_D de(t)}{dt}]$$

,

   où e(t) = r(t) - y(t) est une erreur de commande d'un système, r(t) est la vitesse de ligne attendue, y(t) est la vitesse de ligne de la grande bobine ou une vitesse de ligne réelle de la petite bobine, $K_p$ est un coefficient proportionnel, $T_I$ est une constante de temps d'intégration, et $T_D$ est une constante de temps dérivée.

3. Procédé selon la revendication 1, dans lequel les identificateurs comprennent des bandes agencées à des intervalles uniformes dans la direction longitudinale de la bande.

4. Procédé selon la revendication 1, comprenant en outre de :
   comparer, la vitesse de ligne calculée de la grande bobine et la vitesse de ligne calculée de la petite bobine, avec la vitesse de ligne attendue respectivement, et commander le module de stockage temporaire de billets de banque pour cesser de fonctionner au cas où une différence entre la vitesse de ligne de la grande bobine et la vitesse de ligne attendue ou une différence entre la vitesse de ligne de la petite bobine et la vitesse de ligne attendue est supérieure à une valeur prédéfinie.

5. Procédé selon la revendication 1, comprenant en outre de :
   détecter l'amplitude de la tension de la bande, et commander le module de stockage temporaire de billets de banque pour cesser de fonctionner au cas où la tension de la bande est supérieure à une tension maximale prédéfinie ou la tension de la bande est inférieure à une tension minimale prédéfinie.

6. Module de stockage temporaire de billets de banque, comprenant : un premier moteur électrique (6), un second moteur électrique (7), une grande bobine (1) entraînée par le premier moteur électrique (6), et une petite bobine (2) entraînée par le second moteur électrique (7), et une bande (3), dans lequel deux extrémités de la bande (3) sont fixées respectivement sur la grande bobine (1) et la petite bobine (2), **caractérisé en ce que** des informations d'identificateurs sont agencées uniformément sur des surfaces de la bande (3) dans une direction longitudinale de la bande (3), et le module de stockage temporaire de billets de banque comprend en outre :

un premier capteur (4) correspondant à la grande bobine (1), configuré pour détecter les informations d'identificateurs sur la bande (3) rétractée ou déployée par la grande bobine (1) et délivrer un élément de premières informations d'identificateurs chaque fois qu'un élément d'informations d'identificateurs est détecté ;

un second capteur (5) correspondant à la petite bobine (2), configuré pour détecter les informations d'identificateurs sur la bande (3) rétractée ou déployée par la petite bobine (2) et délivrer un élément de secondes informations d'identificateurs chaque fois qu'un élément d'informations d'identificateurs est détecté ; et

un microcontrôleur (8), configuré pour compter le nombre d'éléments de premières informations d'identificateurs obtenus dans un temps prédéfini, enregistrer le nombre d'éléments de premières informations d'identificateurs en tant que premier nombre d'identificateurs, compter le nombre d'éléments de secondes informations d'identificateurs obtenus dans le temps prédéfini, enregistrer le nombre d'éléments de secondes informations d'identificateurs en tant que second nombre d'identificateurs, calculer une vitesse de ligne de la grande bobine (1) et une vitesse de ligne de la petite bobine (2) en fonction du temps prédéfini, du premier nombre d'identificateurs, du second nombre d'identificateurs et d'une distance entre les éléments d'informations d'identificateurs, obtenir une première vitesse angulaire correspondant au premier moteur électrique (6) et une seconde vitesse angulaire correspondant au second moteur électrique (7) sur la base d'une vitesse de ligne attendue et d'un algorithme PID, régler une vitesse de rotation du premier moteur électrique (6) correspondant à la grande bobine (1) pour qu'elle soit la première vitesse angulaire, et régler une vitesse de rotation du second moteur électrique (7) correspondant à la petite bobine (2) pour qu'elle soit la seconde vitesse angulaire.

7. Module de stockage temporaire de billets de banque selon la revendication 6, dans lequel le microcontrôleur (8) comprend :

un premier module d'algorithme PID, configuré pour calculer la première vitesse angulaire sur la base d'une équation :

$$u_1(t) = K_P[e_1(t) + \frac{1}{T_I}\int_0^t e_1(t)dt + \frac{T_D de_1(t)}{dt}]$$ ,

où $e_1(t) = r(t) - y_1(t)$ est une erreur de commande de la grande bobine (1) d'un système, $r(t)$ est la vitesse de ligne attendue, $y_1(t)$ est la vitesse de la grande bobine (1), $K_p$ est un coefficient proportionnel, $T_I$ est une constante de temps d'intégration, et $T_D$ est une constante de temps dérivée ; et

un second module d'algorithme PID, configuré pour calculer la seconde vitesse angulaire sur la base d'une équation : $u_2(t) = K_P[e_2(t) + \frac{1}{T_I}\int_0^t e_2(t)dt + \frac{T_D de_2(t)}{dt}]$ où $e_2(t) = r(t) - y_2(t)$ est une erreur de commande de la petite bobine (2) du système, et $y_2(t)$ est la vitesse de la petite bobine (2).

8. Module de stockage temporaire de billets de banque selon la revendication 6, dans lequel le microcontrôleur (8) comprend en outre :
un module de comparaison de vitesse, configuré pour comparer la vitesse de ligne calculée de la grande bobine (1) et la vitesse de ligne calculée de la petite bobine (2) avec la vitesse de ligne attendue, et commander le module de stockage temporaire de billets pour cesser de fonctionner au cas où la différence entre la vitesse de ligne de la grande bobine (1) et la vitesse de ligne attendue ou une différence entre la vitesse de ligne de la petite bobine (2) et la vitesse de ligne attendue est supérieure à une valeur prédéfinie.

9. Module de stockage temporaire de billets de banque selon la revendication 6, comprenant en outre :

un testeur pour la tension de la bande (3), configuré pour détecter l'amplitude de la tension de la bande (3), dans lequel
le module de stockage temporaire de billets de banque est commandé pour cesser de fonctionner au cas où le microcontrôleur (8) détecte que la tension de la bande (3) est supérieure à une tension maximale prédéfinie ou la tension de la bande (3) est inférieure à une tension minimale prédéfinie.

10. Distributeur automatique de billets, dans lequel le distributeur automatique de billets comprend un module de stockage temporaire de billets de banque selon l'une quelconque des revendications 6 à 9.

Count the number of identifiers detected by a first sensor in a preset time period, and count the number of identifiers detected by a second sensor in the preset time period ⟋ S101

↓

Calculate a line speed of the large reel and a line speed of the small reel based on the counted numbers of the identifiers ⟋ S102

↓

Calculate a first angular speed and a second angular speed based on the line speed of the large reel, the line speed of the small reel, an expected line speed and a PID algorithm ⟋ S103

↓

Control the first power motor and the second power motor respectively based on the first angular speed and the second angular speed ⟋ S104

**Figure 1**

**Figure 2**

**Figure 3**

301

3

**Figure 4**

3

**Figure 5**

**EP 3 091 414 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 102930638 A